# EUROPEAN PATENT APPLICATION

(11) **EP 4 481 594 A1**
(43) Date of publication of application: **25.12.2024**
(21) Application number: 23180336.2
(22) Date of filing: 20.06.2023
(51) Int. Cl.: G06F 21/31, G06Q 10/30, G06Q 50/04

(54) **COMPUTER-IMPLEMENTED METHOD AND SYSTEM FOR DIGITALLY CONTROLLING AND/OR MONITORING INDUSTRIAL PRODUCTION OF CHEMICAL PRODUCTS BASED ON RECYCLABLE WASTE MATERIALS**

(71) Applicant: BASF SE, 67056 Ludwigshafen am Rhein (DE)
(72) Inventor: Graf, Nicole, 67061 Ludwigshafen am Rhein (DE); Grumbrecht, Bastian, 67061 Ludwigshafen am Rhein (DE); Feyen, Mathias, 67056 Ludwigshafen am Rhein (DE); Haake, Mathias, 67056 Ludwigshafen am Rhein (DE); Pack, Robert, 67061 Ludwigshafen am Rhein (DE); Klosterhalfen, Steffen Thomas, Stockport SK1 3GG (GB); Mayer, Marion, 67056 Ludwigshafen am Rhein (DE); Krei, Georg Arnold, 67056 Ludwigshafen am Rhein (DE); Strege, Stefan, 67056 Ludwigshafen am Rhein (DE); Frey, Bodo, 67056 Ludwigshafen am Rhein (DE)
(74) Representative: BASF IP Association

(57) **Abstract**

Disclosed is computer-implemented method and system for controlling and/or monitoring production of a product by a production facility using one or more input materials, particularly for production of a chemical product, wherein at least one of the input materials is a waste-derived recyclable material which is based on a waste material being collected by a human individual or a legal entity, and wherein the method comprises the following process steps to be performed in an arbitrary order:
- Verifying the identity of a human individual/legal entity of one or more collected waste materials suitable as the at least one waste-derived recyclable material for use as input material for the production facility;
- gathering one or more material parameters for the collected waste materials from a local or external materials database;
- generating a token based on the gathered one or more material parameters;
- allocating the generated token to a verified identity of the human individual/legal entity.

## Description

### TECHNICAL FIELD

The present disclosure relates to methods and systems for digitally controlling and/or monitoring an industrial production of a chemical product based at least partly on recyclable waste materials.

### TECHNICAL BACKGROUND

In many fields of industrial production, particularly in the field of chemical production, an important aspect of environmental protection and corresponding sustainable production of material-based products is use of recyclable waste materials as input materials for the production process.

### SUMMARY OF THE INVENTION

The underlying idea of the present disclosure is to provide more transparency concerning material quality of collected recyclable waste materials for recycling and according re-use as input material for a production process. Hereby thermal recycling of such recyclable waste material, e.g. by way of waste incineration or storage in a landfill, can be avoided.

Preferred waste materials for such recycling are plastics which represent significant value not only in the arena of circular economy and the corresponding recycling processes, but also for the possible fiscal value for the collecting party (private or legal person). Hereby it is also referred to the constant increasing pollution of the oceans by plastic waste.

According to an underlying concept of the present disclosure, this transparency is achieved by a reliable controlling or monitoring of the origin of such waste material(s), namely based on an identity check of an underlying human individual or a legal entity collecting such waste collecting material(s). This allows to minimize the risk for the collection of waste that cannot be recycled, e.g. using a chemical recycling process.

It is mentioned that in many countries it is already common practice that end consumers (i.e. human individuals) and/or recycling centers (i.e. legal entities) need to collect and sort waste based on the recyclability of an underlying waste material. Such collected recyclable waste materials can only be used as input material for a mentioned chemical recycling (also called "chemcycling") process, instead of being recycled only thermally via incineration, if such waste material(s)comprise(s) a certain minimum quality.

In order to allow to reliably document such quality requirements for collected waste materials, according to a second aspect of the present disclosure, a certification process is disclosed. The underlying certificate may be based on a waste material-related data object wherein an according data object preferably includes data about the amount and the chemical composition of the waste, the location or origin of the collected waste, and the social attributes being gathered by the above-mentioned identity check.

A mentioned chemcycling process, in particular, uses a pyrolysis-based material processing stage and a cracker-based material processing stage which, in combination, allow to convert or transform e.g. a bulk plastic parts into short-chain hydrocarbons which can be used as input materials for a subsequent chemical production process.

The herein further proposed ecosystem includes a circular recycling process which may include the following entities or participants:
- Private/human individual or legal entity (e.g. a recycling center) collecting recyclable waste materials
- Waste management authority (or association for environmental protection) for calculating fiscal remuneration to the waste providing party
- Recycling company, e.g. a private or public entity
- Waste incineration plant operator or landfill operator
- Product producer, operating a processing facility/plant including a pyrolysis-based material processing stage and a steam cracker-based material processing stage

The waste management authority, or association for environmental protection, may be an approved body that generates waste-related material(s) data, e.g. using a hand-held device in order to scan the underlying waste material in order determine or detect the type and/or quality of underlying waste material(s).

According to a first aspect of the herein disclosed computer-implemented method for controlling and/or monitoring production of a product by a production facility using one or more input materials, particularly for production of a chemical product, wherein at least one of the input materials is a waste-derived recyclable material which is based on waste material(s) being collected by a human individual or a legal entity, the method comprises the following process steps to be performed in an arbitrary order:
- Verifying the identity of a human individual/legal entity which provides one or more collected waste material(s) potentially suitable as the at least one waste-derived recyclable material for use as input material(s) for the production facility;
- gathering one or more material parameters for the collected waste material(s) from a local or external materials database, for determining suitability of the collected waste material(s) as input material(s) for the production facility;
- generating a token, based on the result of the verification of the identity of the human individual/legal entity and on the contents of the gathered one or more material parameters;
- allocating the generated token to the verified identity of the human individual/legal entity.

According to another aspect of the herein disclosed method, the gathering of the one or more material parameters for the provided waste materials may be based on one or more obtained physical identifiers associated with corresponding recyclable waste material(s).

According to a further aspect of the herein disclosed method, the one or more physical identifiers may be obtained using a handheld device providing mass spectroscopy and/or IR detection measurement capabilities. Such handheld devices are developed and offered e.g. by trinamiX GmbH, for instance the "Mobile NIR Spectroscopy Solution". But trinamiX GmbH also offers an according measurement solution that can be implemented in a conventional smartphone so that any human individual is enabled to obtain such physical identifiers.

According to a further aspect of the herein disclosed method, the gathering of the one or more material parameters for the provided one or more collected waste material(s) may be based on one or more received virtual identifiers associated with corresponding recyclable waste material(s).

According to a further aspect of the herein disclosed method, the allocated token may be provided to an approved authority for the evaluation of the fiscal value, based on the gathered one or more material parameters for the collected material(s). This allows for an appropriate remuneration of the human individual/legal entity which provided one or more collected waste material(s). These provided waste material(s) may be attested for suitability as waste-derived recyclable material(s) for use as input material(s) for the production facility, namely based on the gathered material parameters and in combination with the physical or virtual identifiers associated with corresponding recyclable material(s).

According to a further aspect of the herein disclosed method, for the above remuneration purpose, the allocated token may be provided to the human individual/legal entity, including the fiscal value of the gathered one or more material parameters for the one or more recyclable material(s).

According to a further aspect of the herein disclosed method, the verified identity of the human individual/legal entity may be used to generate a waste material-related data object for attesting a permitted or valid collection of the provided waste material(s), based on the gathered one or more material parameters for the collected waste material(s) and based on the obtained physical identifiers or received virtual identifiers.

According to a further aspect of the herein disclosed method, authorization to access such a generated data object for attesting the permitted collection of the provided recyclable material(s) may be controlled by at least one authorization rule being associated with a unique identifier.

According to a further aspect of the herein disclosed method, the at least one authorization rule may also be configured for reverse data tracking of the one or more collected waste material(s) to be used for production of a product.

According to a further aspect of the herein disclosed method, the production facility may include a pyrolysis stage and a cracking stage for converting provided waste material into a waste-derived recyclable material which is used as input material for production of the product.

According to another aspect, the herein disclosed method can also be utilized for controlling and/or monitoring the collection of waste materials suitable as the at least one waste-derived recyclable material for use as input material for a production facility for production of a product wherein suitability of such waste materials is attested by a method according to any of the preceding claims.

Herein disclosed is also a software-implemented product element which, when running on a computer, may be used to prove the above-mentioned identity of a human individual/legal entity of one or more collected waste materials suitable as the at least one waste-derived recyclable material for use as input material for the production facility.

The herein also disclosed computer-implemented system for controlling and/or monitoring production of a product by a production facility using one or more input materials, particularly for production of a chemical product, wherein at least one of the input materials is a waste-derived recyclable material which is based on a waste material being collected by a human individual or a legal entity, according to a first aspect, comprises a control unit being set up for the following process steps:
- Verifying the identity of a human individual/legal entity which provides one or more collected waste material(s) suitable as the at least one waste-derived recyclable material for use as input material(s) for the production facility;
- gathering one or more material parameters for the collected waste material(s) from a local or external materials database;
- generating a token based on the gathered one or more material parameters;
- allocating the generated token to a verified identity of the human individual/legal entity.

According to a further aspect of the herein disclosed system, the materials database may be a database arranged in a decentralized network of nodes which share data with each other, for storing available material parameters for a multitude of collectable waste material(s) being suitable as input material(s) for production of a product, particularly a chemical product.

In the area of chemical recycling, regarding suitability as input material(s), the following three exemplary material or substance categories A) - C) can be distinguished:
A) Preferred materials for chemical recycling, i.e. materials with a positive environmental impact:
   Solid hydrocarbon rich materials, such as polymers, e.g. Polyethylene (HPDE, LDPE), Polypropylene (PP) and Polystyrene (EPS), Polyisoprene, Polyisobutylene, Polybutadiene.
B) Less-preferred materials for chemical recycling, i.e. materials with a moderate environmental impact:
   Polyvinvylchlorid (PVC), Polyester (PES), Polyamide (PA), e.g. Nylon, Nylon6 and Nylon 6,6, Polyurethan (PU), Epoxy Resins, Polyethylene Terephthalate (PET),
   Polymethacrylate (PMMA), Polylactic Acid (PLA), Polyacrylonitrile (PAN), and materials containing hydrocarbons derived from wood, agricultural products and algae.
C) Non-preferred materials for chemical recycling, i.e. materials with no or even a negative environmental impact:
   Teflon (PTFE), Silicone, Glass, Pigments, Metal(s) and metal(s) content containing materials as for example (Pb, Hg, As, Zn, Si, Na, K, Mg, Ni, Cu, ....), and the like.

According to a further aspect of the herein disclosed system, the control unit may be set up for generating a waste material-related data object for attesting the permitted collection of provided recyclable waste material(s), based on a verified identity of the underlying human individual/legal entity.

According to a further aspect of the herein disclosed system, authorization to access a generated waste material-related data object for attesting the permitted collection of the provided recyclable waste material(s) may be controlled by at least one authorization rule being associated with a unique identifier.

According to a further aspect of the herein disclosed system, the production facility may include a pyrolysis stage and a cracking stage for converting provided waste material(s) into waste-derived recyclable material(s) which can be used as input material for production of the product by the production facility.

The herein disclosed method and system allow to operate, control or monitor an industrial production of e.g. chemical products based on recyclable waste materials as input materials for the production process, namely with the mentioned transparency regarding the quality of such waste materials and an appropriate fiscal remuneration for the collection and provision of such waste materials.

The feature "waste material-related data object may be implemented by common data encryption technologies, like known blockchain approaches.

The mentioned authorization rules may relate to instruction(s) which, based on the mentioned event trigger, process waste-related material property data specified by the authorization rule to generate and to provide corresponding tracking data. The authorization rule(s) may relate to or include such an event trigger related to the use of the chemical product(s) for producing the underlying waste material or product. The use of such waste-related data may include any processing of the unique identifier, associated with the underlying chemical product and/or the data related to the underlying chemical product. For example, concatenating or linking the unique identifier associated with the waste material or product produced based on the underlying chemical product and the unique identifier associated with the chemical product and/or the data related to the underlying chemical product may be the event trigger specified by the authorization rule.

The at least one authorization rule may relate to at least one event trigger related to the use of the unique identifier associated with the underlying chemical product and/or of the data related to the underlying chemical product. The authorization rule may relate to, or include, instruction(s) based on the at least one event trigger. The event trigger for reverse tracking of the chemical product(s) underlying the present waste material or product may relate to one or more processing steps related to the unique identifier and/or the data related to the chemical product data of the reversely tracked chemical product(s). The event trigger may trigger or initialize instructions to generate tracking data from product data for providing such tracking data.

The authorization rule(s) may also relate to a specification of tracking data based on product data associated with the waste material or product being produced using or based on an underlying chemical product. The authorization rule may specify tracking data based on product data associated with the waste material or product being produced using or based on the chemical product. The authorization rule may specify tracking data to be derived from product data associated with the waste material or product being produced using or based on the chemical product.

### BRIEF DESCRIPTION OF THE DRAWINGS

- FIG. 1: shows a pyrolysis and cracker process according to the prior art;
- FIG. 2: shows a variant of the pyrolysis-based system and process depicted in FIG. 1;
- FIG. 3A: shows an embodiment of the herein disclosed method by a combined block/flow diagram;
- FIG. 3B: shows an embodiment of an token-based identity authoring system; and
- FIG. 4: illustrates how a waste material-related data object may be implemented.

### EMBODIMENTS

In most industrial production technology areas, particularly in the field of chemical production, the management of waste is known to be based on different waste categories, like recyclable or recycled, reused, renewed, renewable or reusable materials. In the chemical field, these materials may also include biomass-based materials or renewable energy-based materials.

In the area of chemical recycling, the environmental impact contributors of chemical materials or substances are their hydrocarbon content, their heating value, their heteroatom content next to C and H, their H2O-content, their biomass content, their metal content, the molecular weight of their hydrocarbons, their content of composite materials (for example multilayer packages or glass fiber containing wind blades), their overall density, their material-specific density differences, their particle size, their material distribution, their degree of "Poyler" cross-liking or their coloration.

In addition, such industrial waste materials may have an impact on known "mass-balance" approaches, which allow to determine the use of chemically recycled or bio-based feedstock materials in a final product. In such mass-balance approaches, both recycled and virgin feedstock or bio-based and fossil feedstock materials may be used in the production process.

More particularly, a mass-balance approach allows to determine the mass fraction of the main component of a high-purity organic material. Therefore, a mass-balance approach is a transparent book-keeping process, like a chain-of-custody approach, that allows for tracking the net amount of sustainable materials as these materials move through a production system or a whole value chain or supply chain. The mass-balance approach thus ensures an appropriate allocation of these materials to the finished goods, based on an auditable bookkeeping.

Thereupon, such industrial waste materials have also a strong impact on carbon footprint-based environmental processing approaches and the related management of CO2 certificates.

In the chemical production arena, so-called "Chemcycling" approaches, e.g. based on a pyrolysis processes or chemical production processes processing Naphtha and bio-based Naphtha, are known.

Nowadays, production facilities and plants being used in different industrial production areas, including the underlying energy flow, the underlying logistics and the given infrastructure, are networked together intelligently in a so-called "Verbund" system. In such a system, for instance, chemical processes can run in different production plants or facilities which may be distributed in different countries or regions where the above mentioned cross-border problem is involved. In such a distributed way, the underlying chemical processes can run in a resource-efficient way with lower energy consumption and higher yields.

In the case of a chemical Verbund system, the complete value chain of such a Verbund includes, for instance, at least one steam cracker and a synthesis gas plant. The synthesis gas plant hereby is a core element of the Verbund. In this value chain, underlying chemical products may be further processed into a multitude of commercial products through further production process steps. Hereby it is aimed that nothing is wasted in the entire production process, what can be achieved in that any by-products of one facility may serve another facility as a valuable input material.

Known "Verbund production systems" also may comprise efficient value chains that extend from basic chemicals to high-value-added products, such as coatings or crop protection agents. Also in this scenario, the by-products of one plant can be used as the starting materials of another. In such a Verbund system, the underlying chemical processes consume less energy, produce higher product yields and conserve resources. In that manner, raw materials and energy can be saved, emissions minimized, logistics costs cut and production-related synergies exploited.

A production "Verbund" (or network) thus ensures competitive supply of key products to all segments with value chains rooted in the Verbund. Hereby it is distinguished between a "Technology Verbund" and a "Digital Verbund". A "Technology Verbund" leverages technological advantages across all segments by breadth, impact and best in class expertise, e.g., biotech sciences, catalysis, formulation platform. A "Digital Verbund" systematically uses and harvests the huge advantages and potential offered by digitalization throughout a production Verbund network, e.g. with respect to data management, scale, artificial intelligence, etc.

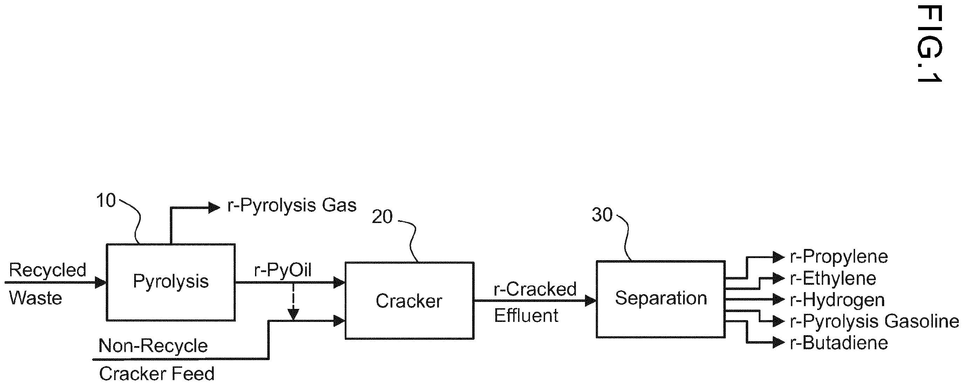

Referring now to US 2022/0402860 A1, as depicted in FIG.1, a mentioned pyrolysis and cracker process is described in more detail. In this chemical production scenario, alkanolamines are produced after a cracker 20, e.g. cracking furnace, and separated accordingly by means of a solids separator or fractionator 30. More particularly, in FIG. 1 a process for employing a recycle content pyrolysis oil composition (r-PyOil) to make one or more recycle content compositions into r-compositions is illustrated. Of course, herein shown are only one of many products that can then be manufactured. Further it has to be mentioned that the shown mixed feedstocks can be fed into the cracker simultaneously and/or mixed beforehand (see e.g. FIG. 5) and then fed in as a mixed feedstock.

The one or more recycle content compositions, i.e. the mentioned "r-composition", may be ethylene, propylene, butadiene, hydrogen, and/or pyrolysis gasoline. The recycled waste may be subjected to pyrolysis in pyrolysis unit 10 to produce a pyrolysis product or effluent comprising a recycle content pyrolysis oil composition ("r-PyOil"). The r-PyOil may be fed to a cracker 20, along with a non-recycle cracker feed, e.g., propone, ethane, and/or natural gasoline. A recycle content cracked effluent ("r-Cracked Effluent") may be produced from the cracker and then may be subjected to separation in a separation train, e.g. a solids separator or a fractionator 30.

At least a portion of the composition may be obtained from the pyrolysis of recycled waste, e.g. waste plastic or waste stream. The "r-Ethylene" may be a composition comprising ethylene obtained from cracking of a cracker feed containing r-PyOil, or ethylene having a recycle content value attributed to at least a portion of the ethylene. The "r-Propylene" may be a composition comprising propylene obtained from cracking of a cracker feed containing r-PyOil, or propylene having a recycle content value attributed to at least a portion of the propylene.

The corresponding values "recycle content value" and "r-value" mean a real unit of measure representative of a real quantity of material having its origin in recycled waste. The r-value may have its origin in any type of recycled waste processed in any type of process.

The values "pyrolysis recycle content value" and "pr-value" mean a real unit of measure representative of a real quantity of material having its origin in the pyrolysis of recycled waste. The pr-value is a specific subset/type of the above-mentioned r-value that is tied to the pyrolysis of recycled waste. Therefore, the term r-value encompasses, but does not require, a pr-value.

The particular recycle content values, i.e. r-value or pr-value, may be calculated or determined by mass or percentage or any other unit of measure and can be determined according to a standard system for tracking, allocating, and/or crediting real recycle content among various compositions. A recycle content value may be deducted from a real recycle content inventory and may be applied to a product or composition to attribute recycle content to the product or composition.

The values "pyrolysis recycle content allotment" and "pyrolysis allotment" or "pr-value" mean a real pyrolysis recycle content that is either transferred from an originating composition, e.g., compound, polymer, feedstock, product, or stream obtained from the pyrolysis of recycled waste. In the latter case, the recycle content value, or at least a portion of which, may originate from the pyrolysis of recycled waste.

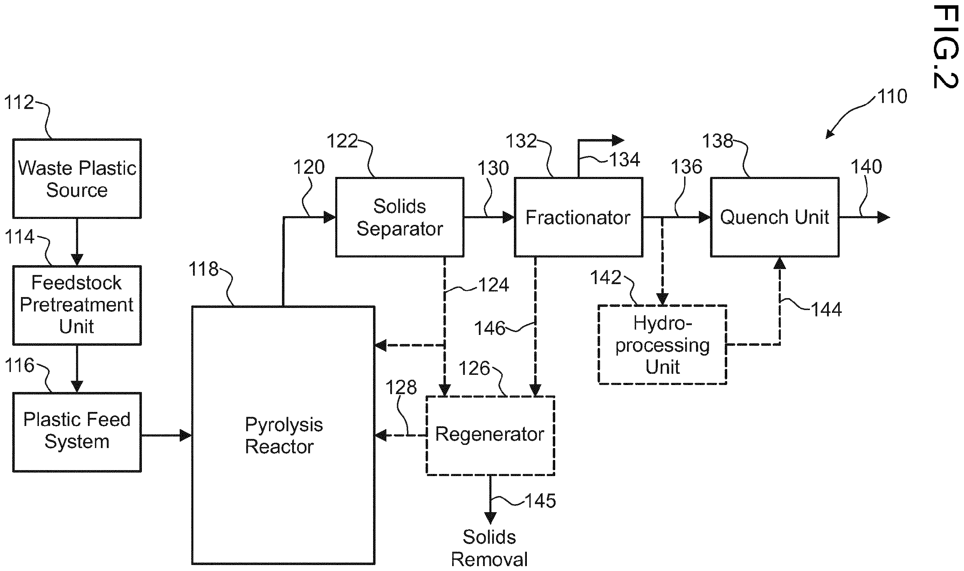

Referring again to US 2022/0402860 A1, Fig. 2 illustrates a simplified variant of the pyrolysis-based system and process illustrated in FIG. 1, in which "purification" is used instead of "hydroprocessing" wherein one or more recycled waste is at least partially converted, particularly recycled plastic waste into various useful r-products.

The exemplary pyrolysis system 110 depicted in FIG. 2 may be employed to at least partially convert one or more recycled waste, particularly recycled plastic waste, into various useful pyrolysis-derived products. The pyrolysis system 110 may include a waste plastic source 112 for supplying one or more waste plastics to the system 110. The plastic source 112 can be, for example, a hopper, storage bin, railcar, over-the-road trailer, or any other device that may hold or store waste plastics. The waste plastics supplied by the plastic source 112 may be in the form of solid particles, such as chips, flakes, or a powder. The waste plastics may include one or more post-consumer waste plastic such as, for example, high density polyethylene, low density polyethylene, polypropylene, other polyolefins, polystyrene, polyvinyl chloride (PVC), polyvinylidene chloride (PVDC), polyethylene terephthalate, polyamides, poly(methyl methacrylate), polytetrafluoroethylene, or combinations thereof. The waste plastics may also include high density polyethylene, low density polyethylene, polypropylene, or combinations thereof. the plastic waste may also comprise not more than a weight percentage of 1 to 25 weight percent of polyvinyl chloride and/or polyethylene terephthalate.

The waste plastic-containing feed may comprise at least a percentage between 30 and 99 weight percent of one or more different kinds of waste plastic. The waste plastic-containing feed may also comprise one or more kinds of plasticized plastics.

As depicted in FIG. 2, the solid waste plastic feed from the plastic source 112 can be supplied to a feedstock pretreatment unit 114. While in the feedstock pretreatment unit 114, the introduced waste plastics may undergo a number of pretreatments to facilitate the subsequent pyrolysis reaction. Such pretreatments may include, for example, washing, mechanical agitation, flotation, size reduction or any combination thereof. The introduced plastic waste may be subjected to mechanical agitation or subjected to size reduction operations to reduce the particle size of the plastic waste. Such mechanical agitation can be supplied by any mixing, shearing, or grinding device known in the prior art which may reduce the average particle size of the introduced plastics by a value between 10 and 75 percent.

Next, the pretreated plastic feed may be introduced into a plastic feed system 116. The plastic feed system 116 may be configured to introduce the plastic feed into the pyrolysis reactor 118. The plastic feed system 116 may comprise any system known in the prior art that is capable of feeding the solid plastic feed into the pyrolysis reactor 118. The plastic feed system 116 may comprise a screw feeder, a hopper, a pneumatic conveyance system, a mechanic metal train or chain, or combinations thereof.

While in the pyrolysis reactor 118, at least a portion of the plastic feed may be subjected to a pyrolysis reaction that produces a pyrolysis effluent comprising a pyrolysis oil, e.g., r-PyOil, and a pyrolysis gas, e.g., r-Pyrolysis Gas. The pyrolysis reactor 118 may be an extruder, a tubular reactor, a tank, a stirred tank reactor, a riser reactor, a fixed bed reactor, a fluidized bed reactor, a rotary kiln, a vacuum reactor, a microwave reactor, an ultrasonic or supersonic reactor, or an autoclave, or a combination of these reactors.

More generally, pyrolysis is a process that involves the chemical and thermal decomposition of the introduced feed. Although all pyrolysis processes may be generally characterized by a reaction environment that is substantially free of oxygen, pyrolysis processes may be further defined, for example, by the pyrolysis reaction temperature within the reactor, the residence time in the pyrolysis reactor, the reactor type, the pressure within the pyrolysis reactor, and the presence or absence of pyrolysis catalysts. The pyrolysis reaction may involve heating and converting the plastic feed in an atmosphere that is substantially free of oxygen or in an atmosphere that contains less oxygen relative to ambient air. The atmosphere within the pyrolysis reactor 118 may comprise not more than 0.5 to 5 weight percent of oxygen gas. The pyrolysis process may be carried out in the presence of an inert gas, such as nitrogen, carbon dioxide, and/or steam. The pyrolysis process may also be carried out in the presence of a reducing gas, such as hydrogen and/or carbon monoxide.

Thereupon, the temperature in the pyrolysis reactor 118 may be adjusted to as to facilitate the production of certain end products. The pyrolysis temperature in the pyrolysis reactor 118 may be between 325°C or 1100°C, including certain smaller ranges like 350 to 900°C, 350 to 700°C, 350 to 550°C, 350 to 475°C. 500 to 1100°C, 600 to 1100°C, or 650 to 1000°C. However, the pyrolysis temperature in the pyrolysis reactor 118 should be not more than 1100°C.

Referring again to FIG. 2, the pyrolysis effluent 120 exiting the pyrolysis reactor 118 generally comprises pyrolysis gas, pyrolysis vapors, and residual solids. The conversion effluent 120 from the pyrolysis reactor 118 may be introduced into a solids separator 122. The solids separator 122 may be any conventional device capable of separating solids from gas and vapors such as a cyclone separator or a gas filter or combination thereof. The solids separator 122 removes a substantial portion of the solids from the conversion effluent 120. At least a portion of the solid particles 24 recovered in the solids separator 122 may be introduced into an optional regenerator 126 for regeneration, generally by combustion. After regeneration, at least a portion of the hot regenerated solids 128 may be introduced directly into the pyrolysis reactor 118. At least a portion of the solid particles 124 recovered in the solids separator 122 may be directly introduced back into the pyrolysis reactor 118, especially if the solid particles 124 contain a notable amount of unconverted plastic waste. Solids may be removed from the regenerator 126 through line 145 and discharged out of the system.

Turning back to FIG. 2, the remaining gas and vapor conversion products 130 from the solids separator 122 may be introduced into a fractionator 132. In the fractionator 132, at least a portion of the pyrolysis oil vapors may be separated from the pyrolysis gas to thereby form a pyrolysis gas product stream 134 and a pyrolysis oil vapor stream 136. Suitable systems to be used as the fractionator 132 may include, for example, a distillation column, a membrane separation unit, a quench tower, a condenser, or any other known separation unit known in the art. Any residual solids 146 accrued in the fractionator 132 may be introduced in the optional regenerator 126 for additional processing.

At least a portion of the pyrolysis oil vapor stream 136 may be introduced into a quench unit 138 in order to at least partially quench the pyrolysis vapors into their liquid form (i.e., the pyrolysis oil). The quench unit 138 may comprise any suitable quench system known in the art, such as a quench tower. The resulting liquid pyrolysis oil stream 140 may be removed from the system 110 and utilized in the other downstream applications described herein. The liquid pyrolysis oil stream 140 may not be subjected to any additional treatments, such as hydrotreatment and/or hydrogenation, prior to being utilized in any of the downstream applications described herein.

At least a portion of the pyrolysis oil vapor stream 136 may also be introduced into a hydroprocessing unit 142 for further refinement. The hydroprocessing unit 142 may comprise a hydrocracker, a catalytic cracker operating with a hydrogen feed stream, a hydrotreatment unit, and/or a hydrogenation unit. While in the hydroprocessing unit 142, the pyrolysis oil vapor stream 136 may be treated with hydrogen and/or other reducing gases to further saturate the hydrocarbons in the pyrolysis oil and remove undesirable byproducts from the pyrolysis oil. The resulting hydroprocessed pyrolysis oil vapor stream 144 may be removed and introduced into the quench unit 138.

Alternatively, the pyrolysis oil vapor may be cooled, liquified, and then treated with hydrogen and/or other reducing gases to further saturate the hydrocarbons in the pyrolysis oil. In this case, the hydrogenation or hydrotreating is performed in a liquid phase pyrolysis oil. No quench step is required in this embodiment post-hydrogenation or post-hydrotreating.

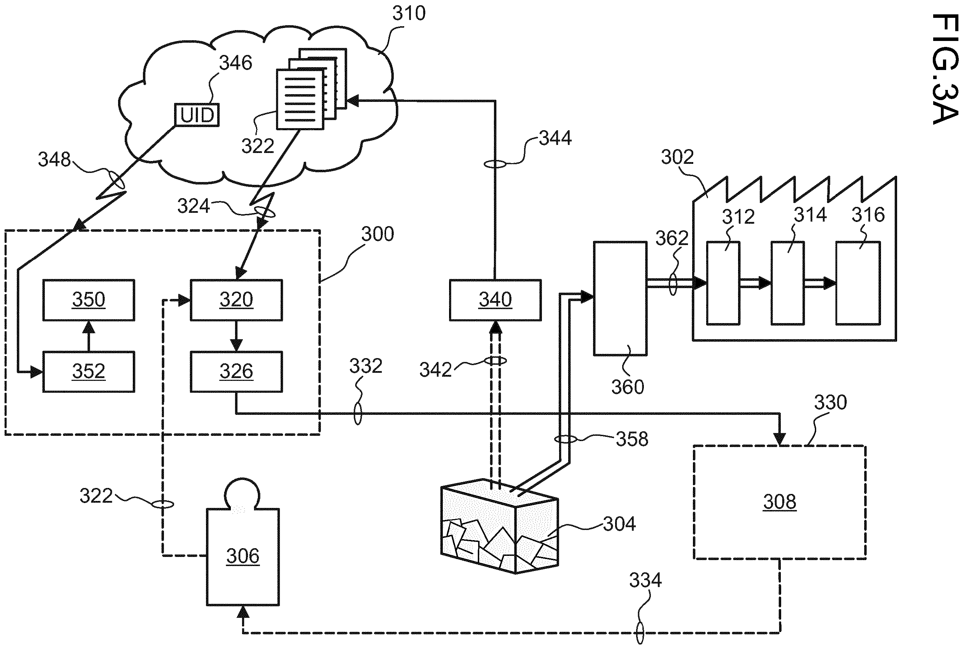

FIG. 3A depicts an embodiment of the herein disclosed method for controlling 300 the production of a chemical product by a production facility 302 using one or more input materials. At least one of the input materials is a waste-derived recyclable material which is based on waste material(s) being collected by a human individual 306, i.e. a waste collecting private person. Alternatively, the collecting of such waste material(s) can be accomplished by a legal entity like a private or public waste recycling or waste treatment company.

In the present embodiment, a control unit 300 is either independent from the production facility 302, in the present example a chemical production plant, However, the principles of the herein disclosed method and system can also be applied or used with other production facilities, plants or factories which also use waste-related or waste-derived recyclable materials as input or starting materials for their production of products.

In the present scenario it is assumed that the human individual 306 has collected plastic waste in a waste bin 304. A sample of this waste is chemically and/or physically analyzed by a handheld device 340 in order to obtain a physical identifier for this portion 342 of the waste. Such a handheld device can be a smartphone and a suitable software app like the mentioned trinamiX or the known tomra approach. The results of this analysis are transmitted 344 to a cloud computing platform 310 which provides a database of existing material parameters 322 for a multitude of plastic materials. These material parameters are associated, e.g. by means of a reference list, with underlying chemical and/or physical properties.

Based on the results of the chemical/physical analysis, corresponding material parameters are gathered by the control unit 300 via data transmission line 324. The control unit 300 comprises a token generator 320 which generates an according token for the collected waste 304, wherein the identity of the waste collecting person 306 is verified via communication line 325 using commonly known personal identification approaches like electronic identification of a person using an electronic ID card. The token generated by the token generator 320 is transmitted to an allocation unit 326 which allocates the generated token to the person 306. In addition, the amount or weight of the collected waste 304 needs also to be documented in the token and/or waste material-related data object described herein.

The allocated token is then transferred to an approved authority 308, e.g. an official (national or international) authority for waste management. This authority 308 determines a fiscal value for the collected waste 304 which has been attested to be suitable as input material for the production facility 302 by means of the token generator 320, namely based on the underlying gathered material parameters 322. The authority 308 includes or stores the assessed fiscal value to the allocated 326 token and sends it via data transmission line 334 to the collecting person 306 who may redeem the according financial profit e.g. from an established bank or a cash dispenser.

In parallel to the described generation 320 of the token, a data object generator 350 (also included in this embodiment in the control unit 300 but can be a separate processing unit) generates a waste material-related data object for the underlying collected waste 304. The passport also includes identity information about the collecting person 306. For generating the passport, a unique identifier 346 (UID) is required which is transmitted to an authorization unit 352 via a data transmission line 348. The authorization unit 352 performs an authorization process, e.g. based on an authorization rule, to grant also access to the generated data object by any participant of the present scenario, e.g. the collecting person 306 or the approved authority 308. Insofar, the generated 350 data object can only be gathered or accessed by means of the UID 346.

The approved or attested collected waste 304 then is physically transported to a material feeding unit 360 which feeds 362 the collected waste material(s) 304 to a first production area of the production facility 302. The first production area, in the present embodiment or scenario, includes a so-called "chemcycling" processing stage which consists of a pyrolysis-based material processing stage 312 and a subsequent steam cracker-based material processing stage 314. The short-chain hydrocarbons resulting from the bulk plastic parts being fed into the first production area are then transferred or transported to a second production area of the production facility 302 which comprises a chemical production line 316 for producing a chemical product.

It is noted that the double lines 342, 358, 362 indicate material movement or transport, in contrast to the other lines 348, 324 344 334, 325, or 332 which indicate a data flow or data transmission.

Authorization to access the stored waste material-related data object is based on an access authorization procedure that is associated with the unique identifier and the underlying chemical product data of the waste material/product. The procedure includes instructions for reverse data tracking of the chemical material/product that was underlying to produce the present waste material/product and for generating corresponding tracking data. The authorization procedure particularly includes the mentioned instructions based on the event-based trigger which triggers or initializes instructions to generate the mentioned (reverse) tracking data from the mentioned material/product data. However, the authorization procedure may also specify the tracking data which are derived from the mentioned product data associated with the waste material/product.

The described transfer of the data related to the underlying chemical product data of the waste material or product is based on a decentral network which includes participant nodes configured to perform such data transactions. The participant nodes are associated with producers of the underlying materials/products. The data transactions are based on a transaction protocol that includes an authentication/authorization mechanism. Based on the authentication/authorization mechanism, a peer-to-peer network between the participant nodes of the decentral network is established. The authentication mechanism is associated with the mentioned unique identifier and thus is accessible by a mentioned data providing/consuming service.

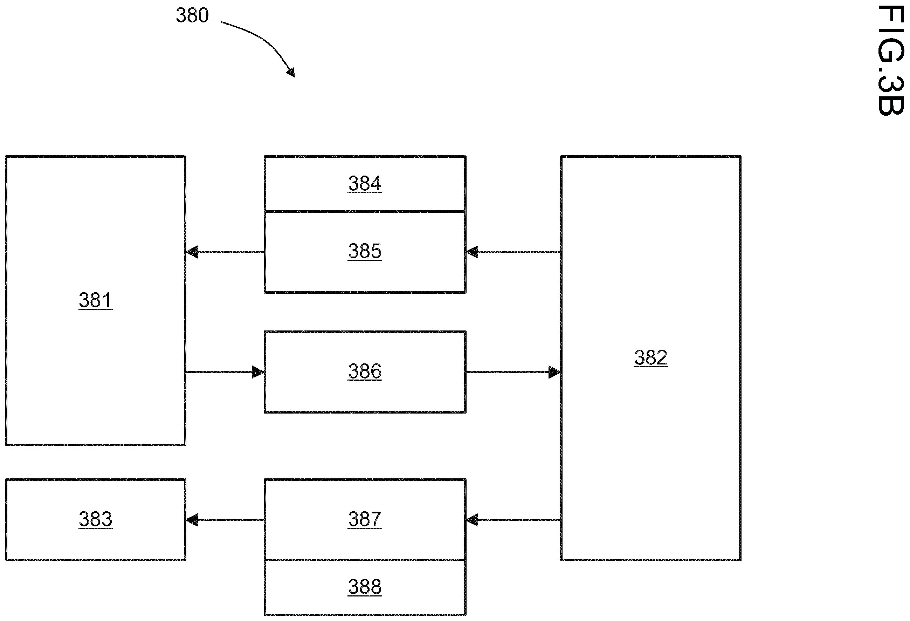

FIG. 3B depicts a data flow diagram illustrating an exemplary token-based identity authoring approach 380 generating a service request using a token value. An interface computing device 382 transmits an application view 384, including a token request 385, to a user computing device 381. Application view 384 includes one or more webpages, mobile application states, and the like. Token request 385 may be an interactive form field configured to capture a token value 386. Alternatively, token request 385 is a computer-executable instruction to generate and transmit token value 386. In other words, token request 385 may be user interactive, or may automatically retrieve token value 386.

Token value 386 is generated by user computing device 381. In this embodiment, token value 386 is randomly generated, unique, and temporary. In at least one aspect, token value 386 may be a one-time-password (OTP). In one embodiment, user computing device 381 generates token value 386 based on a secret shared by identity authority computing device 383 during a previous registration process, such that identity authority computing device 383 can determine if token value 386 was properly generated by user computing device 381.

Interface computing device 382 generates and transmits a service request 387, including token value 386, to identity authority computing device 383. Service request 387 includes token value 386, wherein the service request 387, in this embodiment, does not include any persistent user identifiers (e.g., social security numbers, driver's license numbers), such that interface computing device 382 is not required to store confidential user data (e.g., persistent user identifiers). Instead, interface computing device 382 may interact with user computing device 381 and identity authority computing device 383 using token value 386, while identity authority computing device 383 determines any number of persistent user identifiers associated with token value 386 to retrieve and process confidential user data.

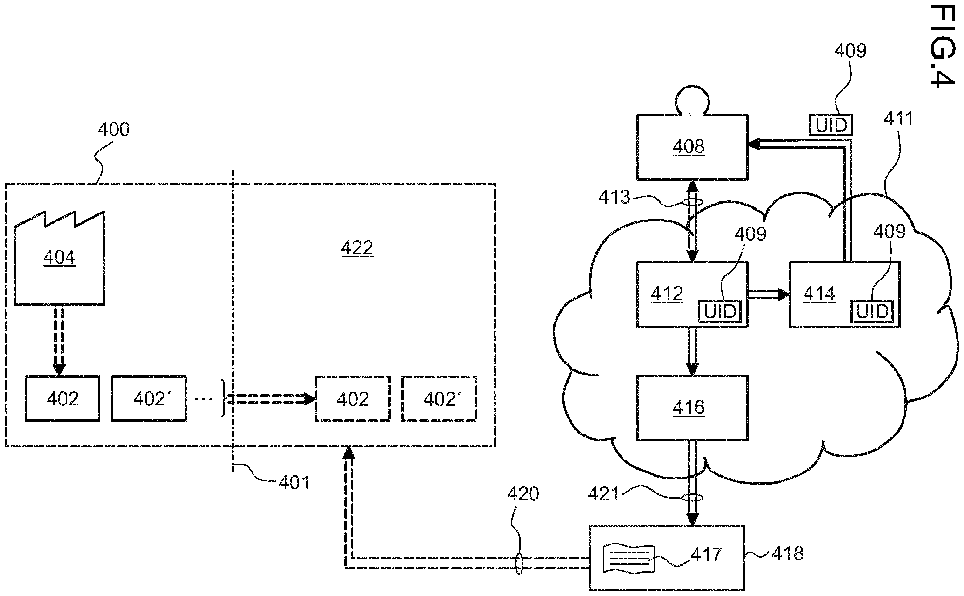

Referring to FIG. 4, it is illustrated how a herein described waste material-related data object can be implemented in connection with an underlying waste-derived material/product within a mentioned distributed and cross-border arranged or located chemical production network 400.

It is hereby assumed that the chemical production network 400 produces a chemical product in a production facility 404 wherein, during the production process, several waste materials 402, 402' etc. are generated. It is further assumed that the generated waste materials 402, 402' are transported or shipped 403 within the chemical production network 400 and meanwhile enter a relevant boundary 401 of the chemical production network 400 between two regions with different technical requirements regarding the possible processing of waste-derived material.

Upon production of the chemical product in the production facility 404, for the generated waste or waste-derived materials 402, 402', a waste material-related data object 417 is generated. For that purpose, an apparatus 410 is configured to generate the waste material-related data object 417.

A requestor 408 requests to acquire one or more of the waste materials 402, 402', who needs to get access to the contents of the waste material-related data object 417 for the above-mentioned purpose, is required to first obtain an according unique identifier 409 being stored in the present example de-centrally in a cloud computing environment ("cloud") 411. For this process step or task, the requestor 408 is also configured to generate an according request 413 for the unique identifier 409. Such a request 413 may be automatically generated or triggered by a labelling system, such as a QR Code generator. The request 413 to provide the unique identifier 409 is provided to a an identifier generator 412 that is configured to generate the unique identifier 409. The identifier generator 412, in the present example, then provides the generated unique identifier 409 to an identifier provider 414.

The identifier provider 414 then provides 415 the unique identifier 409 to the requestor 408, in order to associate the unique identifier 409 with the requested waste materials 402, 402'. This association may include the encoding of the unique identifier into a QR code and providing the QR code for labelling the waste materials 402, 402'. This way, a physical identifier 417 is provided too that relates to the underlying (real) physical entities 402, 402' of the waste materials, based on the unique identifier 409.

The identifier generator 412 also provides the unique identifier 409 to a data object generator 416 that is configured to generate a waste material-related data object 417 for the waste materials 402, 402'. The generated waste material-related data object 417 includes a beforehand described unique identifier 409 and underlying data concerning e.g. the origin and history and chemical properties of the waste-derived materials 402, 402'. Those data further include a digital representation pointing to the underlying waste materials data or parts thereof. The waste material-related data object 417 further includes, or is related to, an authentication mechanism that is associated with the unique identifier 409 and the mentioned chemical data of the waste-derived materials 402, 402'.

In the present example, the waste material-related data object 417 is provided 421 to a corresponding data object provider 418. The data object provider 418 is configured to provide 420 the waste material-related data object 417 and the chemical waste-related data associated with the waste material-related data object 417 to the chemical production network 400, in the present example from the left side with the production facility 404 (i.e. source region) to the right side (i.e. target region) 422 between the technical regulatory relevant boundary 401 of the chemical production network where the waste materials 402, 402' have been transported or shipped.

Referring again to FIG. 1, during the pyrolysis step of the underlying production process, the further values "pyrolysis recycle content value" and "pr-value" relate to the real quantity of material having its origin in the pyrolysis of recycled waste. The pr-value insofar is a subset of the mentioned "r-value" that is tied to the pyrolysis of recycled waste. The r-value or pr-value can be calculated by mass or percentage wherein a recycle content value may be deducted from a real recycle content inventory and may be applied to a product or composition to attribute recycle content to the product or composition.

## Claims

1. Computer-implemented method for controlling and/or monitoring production of a product by a production facility using one or more input materials, particularly for production of a chemical product, wherein at least one of the input materials is a waste-derived recyclable material which is based on waste material(s) being collected by a human individual or a legal entity, the method comprising the following process steps to be performed in an arbitrary order:
- Verifying the identity of a human individual/legal entity which provides one or more collected waste material(s) potentially suitable as the at least one waste-derived recyclable material for use as input material(s) for the production facility;
- gathering one or more material parameter(s) for the collected waste material(s) from a local or external materials database, for determining suitability of the collected waste material(s) as input material(s) for the production facility;
- generating a token, based on the result of the verification of the identity of the human individual/legal entity and on the contents of the gathered one or more material parameters;
- allocating the generated token to the verified identity of the human individual/legal entity.

2. Method according to claim 1 wherein the gathering of the one or more material parameters for the provided waste materials is based on one or more obtained physical identifiers associated with corresponding recyclable waste material(s).

3. Method according to claim 2 wherein the one or more physical identifiers are obtained using a handheld device providing mass spectroscopy and/or IR detection measurement capabilities.

4. Method according to claim 1 wherein gathering the one or more material parameters for the provided one or more collected waste material(s) is based on one or more received virtual identifiers associated with corresponding recyclable waste material(s).

5. Method according to any of the preceding claims wherein the allocated token is provided to an approved authority for the evaluation of the fiscal value, based on the gathered one or more material parameters for the collected waste material(s).

6. Method according to claim 4 or 5 wherein the allocated token is provided to the human individual/legal entity, including the fiscal value of the gathered one or more material parameters for the one or more recyclable material(s).

7. Method according to any of the preceding claims wherein the verified identity of the human individual/legal entity is used to generate a waste material-related data object for attesting a permitted collection of the provided waste material(s), based on the gathered one or more material parameters for the collected waste material(s) and based on the obtained physical identifiers or received virtual identifiers.

8. Method according to claim 7 wherein authorization to access a generated waste material-related data object for attesting the permitted collection of the provided recyclable material(s) is controlled by at least one authorization rule being associated with a unique identifier.

9. Method according to claim 8 wherein the at least one authorization rule is configured for reverse data tracking of the one or more collected waste material(s) to be used for production of a product.

10. Method according to any of the preceding claims wherein the production facility includes a pyrolysis stage and a cracking stage for converting provided waste material into a waste-derived recyclable material which is used as input material for production of the product.

11. Computer-implemented method for controlling and/or monitoring the collection of waste materials suitable as the at least one waste-derived recyclable material for use as input material for a production facility for production of a product wherein suitability of such waste materials is attested by a method according to any of the preceding claims.

12. Software-implemented product element when running on a computer for proving the identity of a human individual/legal entity of one or more collected waste materials suitable as the at least one waste-derived recyclable material for use as input material for the production facility, according to any of method claims 1 to 11.

13. Computer-implemented system for controlling and/or monitoring production of a product by a production facility using one or more input materials, particularly for production of a chemical product, wherein at least one of the input materials is a waste-derived recyclable material which is based on a waste material being collected by a human individual or a legal entity, the system comprising a control unit being set up for:
- Verifying the identity of a human individual/legal entity which provides one or more collected waste material(s) suitable as the at least one waste-derived recyclable material for use as input material(s) for the production facility;
- gathering one or more material parameters for the collected waste material(s) from a local or external materials database;
- generating a token based on the gathered one or more material parameters;
- allocating the generated token to a verified identity of the human individual/legal entity.

14. System according to claim 13 wherein the materials database is a database being arranged in a decentralized network of nodes which share data with each other, for storing available material parameters for a multitude of collectable waste material(s) being suitable as input material(s) for production of a product, particularly a chemical product.

15. System according to claim 13 or 14 wherein the control unit is set up for generating a waste material-related data object for attesting the permitted collection of provided recyclable waste material(s), based on a verified identity of the underlying human individual/legal entity.

16. System according to any of claims 13 to 15 wherein authorization to access a generated waste material-related data object for attesting the permitted collection of the provided recyclable waste material(s) is controlled by at least one authorization rule being associated with a unique identifier.

17. System according to any of claims 13 to 16 wherein the production facility includes a pyrolysis stage and a cracking stage for converting provided waste material(s) into waste-derived recyclable material(s) which can be used as input material for production of the product by the production facility.
